# EUROPEAN PATENT SPECIFICATION

(11) **EP 3 930 871 B1**
(45) Date of publication and mention of the grant of the patent: **25.10.2023**
(21) Application number: 20706331.4
(22) Date of filing: 28.02.2020
(51) Int. Cl.: B01D 35/05

(54) **METHOD OF FILTERING SLURRY**
VERFAHREN ZUM FILTERN VON SCHLAMM
PROCÉDÉ DE FILTRAGE DE BOUE

(30) Priority: 28.02.2019 EP 19160033
(43) Date of publication of application: 05.01.2022
(73) Proprietor: ROCKWOOL A/S, 2640 Hedehusene (DK)
(72) Inventor: EMBORG, Michaeel, 4060 Kirke Saaby (DK)
(74) Representative: Gill Jennings & Every LLP
(86) International application number: PCT/EP2020/055276
(87) International publication number: WO 2020/174082

(56) References cited:
- WO-A1-97/07869
- WO-A1-2014/029873
- FR-A1- 2 548 168
- JP-U- S5 687 114

## Description

### Field of the invention

This invention relates to a method of filtering slurry, a system comprising a filter apparatus, a filter apparatus for filtering slurry and use of a filter apparatus for increasing the solids component of slurry.

### Background of the invention

In a variety of industries, in particular the agricultural industry, waste slurry is produced. Typically, this waste slurry must be treated or stored before further use or disposal. In animal farming, slurry or manure is collected in a tank. From this tank, the slurry is used as fertiliser for fields. To facilitate the handling of the slurry and reduce the disadvantages with the fertilising liquid manure, such as odour, solids are preferably removed from the slurry before pumping the liquid to a tank which is taken to the fields for fertilising.

WO 2017/040010 discloses a filtration system for filtering waste water with a plurality of filtering tanks being lifted in and out of a containment chamber and the by-product contained in the filter is easily removable when the filter tank is lifted out.

WO 96/38387 discloses a method for biological cleaning of water comprising guiding the water through a filter. The filter comprises mineral wool provided as rolls of filter material packages and placed in the tank so dirty water is drawn through the filter packages and drawn out through a clean water outlet. The solids filtered out of the water are trapped in the rolls of filter.

WO 94/09883 discloses a method and an apparatus for removing solids from a liquid by filtration. The filter is a mineral wool mat, having fibres orientated in a certain direction. The filter is rotated through the liquid whereby solids are filtered out and contained in the filter.

WO 97/07869 discloses a high volume, self-cleaning filter unit that includes at least one cage support with a downwardly angled surface having a direct path filter media sealed thereto, with a suction source to extract filtered fluid from the interior of the cage support.

JP S 5687114 discloses a filtration system for warm bath water such that multiple people may bath consecutively in clean water.

WO 2014/029873 discloses a structure for draining surface water, comprising a coherent force distribution layer and a drain layer, wherein the drain layer is formed of an array of coherent man-made vitreous fiber (MMVF) drain elements, wherein each of the drain elements comprises man-made vitreous fibres bonded with a cured binder composition, wherein the drain layer is below the force distribution layer.

Common to these filter arrangements for filtration of solids from slurry is that the filtration process must be discontinued in order to remove the filter cake, i.e. the collected solids, from the filter.

Over the recent years, it has been found that the solids component of manure slurry may also be used for production of biogas. For this use it is desirable to remove a percentage of the liquid component of manure slurry, leaving a solid-rich slurry i.e. a high percentage of solids in the slurry. Therefore, it would be desirable to provide a method of filtering slurry which allows for this solids-rich slurry to be easily and conveniently removed.

US 4,871,454 discloses a portable filtration vessel for filtering slurry. The vessel is used in a batch process. Slurry is poured into the vessel and separated into liquid and solids.

US 2010/0055861 A1 discloses an apparatus for dewatering slurry. Again, this apparatus may be portable and is used in a batch process. Slurry is poured into the apparatus, and a vehicle or hopper is used to collect the dewatered solids.

It would be desirable to provide a method of filtering slurry which can be carried out as a continuous process i.e. not in batches. It would be desirable to provide such a method, which also allows for the solids-component (i.e. solid-rich slurry) and the liquid component to be easily and conveniently removed.

It is an object of the present invention to provide an improved method of filtering and a filter apparatus which can carry out the filtration in a continuous manner and so that the liquid component and the solids component (i.e. solid-rich slurry) are separated and collected so both portions can be easily processed individually.

### Summary of the invention

In a first aspect of the invention, there is provided a method of filtering slurry according to claim 1 comprising the steps of:
- providing a tank containing slurry, wherein the slurry comprises a liquid component and a solids component; and wherein the tank defines a first fluid region;
- providing a filter apparatus comprising a filter unit and a support structure, wherein the filter unit is at least partially submerged in the slurry, wherein the filter unit comprises sides defining an internal cavity; and wherein the internal cavity defines a second fluid region;
- providing a pump having an inlet and an outlet, wherein the inlet is positioned in the internal cavity and the outlet is connected to a liquid storage tank;
- activating the pump, such that the liquid component of the slurry passes from the first fluid region, through the walls of the filter apparatus and into the second fluid region;
wherein the sides of the filter unit comprise coherent man-made vitreous fibres (MMVF) bonded with a cured binder composition.

In a second aspect of the invention, there is provided a system according to claim 11 comprising:
- a tank containing slurry;
- a filter apparatus comprising a filter unit and a support structure, wherein the filter unit is at least partially submerged in the slurry, wherein the filter unit comprises sides defining an internal cavity;
- a pump having an inlet and an outlet, wherein the inlet is positioned in the internal cavity and the outlet is connected to a liquid storage tank;
wherein the sides of the filter unit comprise coherent man-made vitreous fibres (MMVF) bonded with a cured binder composition.

In a third aspect of the invention, there is provided a filter apparatus for a slurry tank according to claim 13, comprising:
a filter unit and a support structure, wherein the filter unit comprises sides defining an internal cavity;
wherein the sides of the filter unit comprise coherent man-made vitreous fibres (MMVF) bonded with a cured binder composition.

In a fourth aspect of the invention, there is provided use of a filter apparatus for increasing the solids content of slurry according to claim 14, wherein the filter apparatus comprises; a filter unit and a support structure, wherein the filter unit comprises sides defining an internal cavity; wherein the sides of the filter apparatus comprise coherent man-made vitreous fibres (MMVF) bonded with a cured binder composition.

The present invention provides a method of filtering slurry, such as manure, so that particles are removed to produce a liquid component i.e. a fertilising liquid and also a solids-component i.e. slurry with a high percentage of solids, which may be left in the slurry tank and pumped out when required. The filter is semi-submerged or completely submerged in the slurry tank with the pump inside the cavity of the filter apparatus.

Typically the solid percentage for manure is approx. 4%. However, by the invention it is found that the solid-rich slurry left in the slurry tank can be raised to 50%. This is advantageous as the higher the solids in the slurry, the higher the yield in biogas production. In relation to the agricultural production, it is moreover advantageous that the separation of particle-free liquid and solid-rich slurry takes place on the farm where the slurry tank is situated. This reduces the amounts being transported either to the farm fields or to the biogas production sites.

Liquid is drawn through the filter by the pump in the internal cavity so the solids are deposited on the outside of the filter apparatus and the particle-free liquid inside the internal cavity is pumped to an external tank from which it can be distributed on the farm fields. The solid-rich slurry (i.e. the solids component) left on the outside of the filter may advantageously have 6-15 % solids, more preferably 8 to 12 wt%, so the slurry is still so liquidised that it can be pumped out of the slurry tank by a sludge exhauster or the like and dried so it can be used in a bio plant for the production of biogas.

By the filter apparatus according to the invention, it is found that the filtration may be performed in a continuous manner and so that the particle-free liquid and the solid-rich slurry are separated and collected so both portions can be easily processed individually.

### Brief description of figures

Fig. 1 is a schematic cross-sectional side view of a filter apparatus according to the invention partially submerged in a slurry tank;
Fig. 2 is a schematic perspective view of a filter unit comprising man-made vitreous fibres according to an embodiment of the invention
Fig. 3 is a schematic cross-sectional side view of a filter apparatus according to the invention partially submerged in a slurry tank;
Fig. 4 is a schematic cross-sectional side view of a filter apparatus according to the invention completely submerged in a slurry tank.

### Detailed description

The invention relates to a method of filtering slurry. The term slurry has its normal meaning in the art i.e. a semi-liquid mixture comprises particles suspended in liquid. The slurry may be any kind of slurry, such as the process water from mineral wool production (i.e. a mixture of liquid and mineral wool fibres), manure slurry, cement slurry, coal slurry or oil slurry. Preferably, the slurry is manure slurry. Manure slurry typically consists of animal waste and other organic matter such as hay, and water run-off from washing down areas of the farm (e.g. stables, barns). This manure slurry is a rich source of nutrients and can therefore be used to fertilise fields. Equally, the solids in the slurry can be used for production of biogas. Slurry comprises a liquid component and a solids component. The liquid component can be defined as a particle-free liquid or substantially particle-free liquid. Preferably particle-free means containing <0.5 wt% of particles having a length of ≤ 64 µm, most preferably <0.1. wt% of such fibres.

The solids component may also be called a solids-rich slurry. Preferably, the solids component is a slurry comprising ≤ 50 wt% solids, more preferably 6 to 15 wt% solids, most preferably 8 to 12 wt% solids.

The method of filtering according to the present invention requires the step of providing a tank that contains slurry, wherein the tank defines a first fluid region. The tank may be any suitable tank for holding a volume of slurry. It may also be called a container. A typical slurry tank for storing manure in an agricultural farm is typically 30-50 m in diameter. In one embodiment, the tank has a bottom surface, side walls and an open upper face. In another embodiment, the tank may comprise a cover or lid to prevent the release of gases from the slurry. The tank according to the present invention defines a first fluid region, that is, a region in which fluid slurry is contained.

The method of filtering according to the present invention requires the step of providing a filter apparatus comprising a filter unit and a support structure. The filter unit according to the present invention comprises sides defining an internal cavity. The sides defining an internal cavity may also be called walls. The sides form a hollow cavity (the internal cavity) with an opening at the upper end.

The filter unit may have a bottom surface. In a preferred embodiment, the sides of the filter unit form side surfaces and a bottom surface. Preferably, the filter unit comprises a bottom surface, sides and an open upper face. The filter unit may be a cuboid with an opening at the top. A benefit of this is that it is easy to manufacture.

At least a part of the area of the sides of the filter unit is permeable to liquid. The filter unit may have a bottom surface that is not permeable to liquid. Alternatively, the filter unit may have a bottom surface that is permeable. In a preferred embodiment, the filter unit comprises sides that are permeable and a bottom surface that is impermeable to liquid.

The sides of the filter unit define an internal cavity, which defines a second fluid region. By this, it is meant that fluid passes from the first fluid region to the second fluid region, through the sides of the filter unit. The internal cavity, formed by the sides of the filter unit, provides a second fluid region that is separate to the slurry in the tank (i.e. the first fluid region). Any liquid that flows from the first fluid region to the second fluid region must pass through the walls of the filter unit. In doing so, the filter apparatus filters out particles in the slurry, and a liquid component (i.e. particle-free liquid) is held within the internal cavity, ready to be pumped to a liquid storage tank.

The sides of the filter unit comprise coherent man-made vitreous fibres (MMVF) bonded with a cured binder composition. In one embodiment, the filter unit comprises a bottom surface comprising coherent man-made vitreous fibres (MMVF) bonded with a cured binder composition.

The man-made vitreous fibres (MMVF) can be glass fibres, ceramic fibres, basalt fibres, slag wool, stone wool and others, but are usually stone wool fibres. Stone wool generally has a content of iron oxide at least 3% and content of alkaline earth metals (calcium oxide and magnesium oxide) from 10 to 40 %, along with the other usual oxide constituents of MMVF. These are silica; alumina; alkali metals (sodium oxide and potassium oxide) which are usually present in low amounts; and can also include titania and other minor oxides. Average geometric fibre diameter is often in the range of 2 to 10 µm, preferably 2 to 4 µm.

The sides of the filter unit are preferably in the form of a coherent mass of MMVF i.e. a MMVF substrate. That is, the sides of the filter unit are generally a coherent matrix of MMVF fibres bonded with a cured binder composition, which has been produced as such, or has been formed by granulating a slab of MMVF and consolidating the granulated material. Slurry typically has a pH of 6, so by providing the MMVF of such kind it is ensured that the MMVF maintains its coherency and is not dissolved or otherwise disintegrated when partially-submerged in the slurry tank.

The sides of the filter unit according to the present invention have the advantage of being more-environmentally-friendly than filters made from plastic, and more mechanically stable that filters made from geotextile material.

The sides of the filter unit preferably have dimensions that are suitable for fitting into the slurry tank. This may be any suitable length, height and thickness. Preferably, the sides of the filter unit have dimensions in the range of 50 to 200 cm X 30 to 200 cm X 25 to 200 cm.

The sides of the filter unit preferably have a density of 70-200 kg/m³, preferably 70 to 150 kg/m³, most preferably 100 to 120 kg/m³. This range has the advantage of having satisfactory filtering effect, whilst keeping the weight sufficiently low.

The binder may be any of the binders known for use as binders for coherent MMVF products. Preferably the sides of the filter unit comprise 1.0 wt% to 6.0 wt% of cured binder composition, preferably 2.5 wt% to 4.5 wt%, based on the weight of the MMVF. The advantage associated with this range is that it ensures the required mechanical and handling properties are achieved. For example, this results in satisfactory compression and rigidity properties

The binder composition in the present invention may be hydrophilic or hydrophobic.

The binder can be an organic hydrophobic binder, and in particular it can be a conventional heat-curable (thermosetting), binder of the type which has been used for many years in MMVF growth substrates (and other MMVF-based products). This has the advantage of convenience and economy. Thus, the binder is preferably a phenol formaldehyde resin or urea formaldehyde resin, in particular phenol urea formaldehyde (PUF) resin.

The binder may be a formaldehyde-free aqueous binder composition comprising: a binder component (A) obtainable by reacting at least one alkanolamine with at least one carboxylic anhydride and, optionally, treating the reaction product with a base; and a binder component (B) which comprises at least one carbohydrate, as disclosed in WO2004/007615. Binders of this type are hydrophilic.

WO97/07664 discloses a hydrophilic substrate that obtains its hydrophilic properties from the use of a furan resin as a binder. Binders of this type may be used in the present invention.

WO07129202 discloses a hydrophilic curable aqueous composition wherein said curable aqueous composition is formed in a process comprising combining the following components:
(a) a hydroxy-containing polymer,
(b) a multi-functional crosslinking agent which is at least one selected from the group consisting of a polyacid, salt(s) thereof and an anhydride, and
(c) a hydrophilic modifier;
wherein the ratio of (a):(b) is from 95:5 to about 35:65.

The hydrophilic modifier can be a sugar alcohol, monosaccharide, disaccharide or oligosaccharide. Examples given include glycerol, sorbitol, glucose, fructose, sucrose, maltose, lactose, glucose syrup and fructose syrup. Binders of this type can be used in the present invention.

Further, a binder composition comprising:
a) a sugar component, and
b) a reaction product of a polycarboxylic acid component and an alkanolamine component,
wherein the binder composition prior to curing contains at least 42% by weight of the sugar component based on the total weight (dry matter) of the binder components may be used in the present invention.

The binder may be as described in WO 2017/114724, wherein the binder composition prior to curing comprises the following components:
a component (i) in the form of one or more compounds selected from
   - compounds of the formula, and any salts thereof: 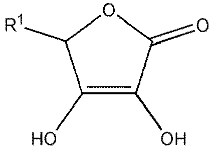
in which R1 corresponds to H, alkyl, monohydroxyalkyl, dihydroxyalkyl, polyhydroxyalkyl, alkylene, alkoxy, amine;
   - compounds of the formula, and any salts thereof: 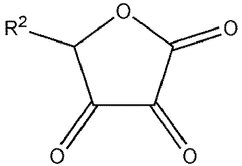
in which R2 corresponds to H, alkyl, monohydroxyalkyl, dihydroxyalkyl, polyhydroxyalkyl, alkylene, alkoxy, amine;
a component (ii) in the form of one or more compounds selected from the group of ammonia, amines or any salts thereof;
a component (iii) in the form of one or more carbohydrates.

The binder composition may be as described in WO 2017/114723 wherein the binder composition prior to curing comprises the following components:
- a component (i) in form of one or more carbohydrates;
- a component (ii) in form of one or more compounds selected from sulfamic acid, derivatives of sulfamic acid or any salt thereof.

The binder composition may be a composition comprising at least on hydrocolloid prior to curing. Preferably, the at least one hydrocolloid is selected from the group consisting of gelatin, pectin, starch, alginate, agar agar, carrageenan, gellan gum, guar gum, gum arabic, locust bean gum, xanthan gum, cellulose derivatives such as carboxymethylcellulose, arabinoxylan, cellulose, curdlan, β-glucan.

Preferably, the sides of the filter unit comprising MMVF are hydrophilic, that is, they attract water. Hydrophilic has its normal meaning in the art. The inventors have surprisingly discovered that the walls are sufficiently hydrophilic by omitting addition of oil, which is typically added to MMVF products in fields such as insulation.

The hydrophilicity of a sample of MMVF substrate can be measured by determining the sinking time of a sample. A sample of MMVF substrate having dimensions of 100 x 100 x 15 mm to 100 x 100 x 40 mm is required for determining the sinking time. A container with a minimum size of 200 x 200 x 200 mm is filled with water. The sinking time is the time from when the sample first contacts the water surface to the time when the test specimen is completely submerged. The sample is placed in contact with the water in such a way that a cross-section of 100x100 mm first touches the water. The sample will then need to sink a distance of just over 65mm in order to be completely submerged. The faster the sample sinks, the more hydrophilic the sample is. The MMVF substrate is considered hydrophilic if the sinking time is less than 240 s. Preferably the sinking time is less than 100 s, more preferably less than 60 s, most preferably 50 s. In practice, the MMVF substrate may have a sinking time of 50 s or less.

Preferably, the sides of the filter unit are substantially free from oil. By this, it is meant that the filter unit comprises less than 0.2 wt% oil, preferably less than 0.1 wt% of oil. Most preferably the filter unit is free from oil. By this, it is meant that the filter unit has 0 wt% of oil. Oil is typically added to MMVF substrates which are to be used for purposes such as sound, insulation, thermal insulation and fire protection. However, the inventors have surprisingly discovered that the walls of the filter apparatus are sufficiently hydrophilic to filter water when they are free from oil or substantially free from oil. In this embodiment, the binder composition may be hydrophilic or hydrophobic, as discussed above. Preferably, when the binder composition is hydrophobic, the sides of the filter unit comprising MMVF are free from or substantially free from oil.

Hydrophilicity of the walls of the filter apparatus comprising MMVF may be defined by the hydraulic conductivity. Preferably, the hydraulic conductivity is in the range of 5 m/day to 200 m/day, preferably 10 m/day to 50 m/day. Hydraulic conductivity is measured in accordance with ISO 17312:2005. The advantage of this hydraulic conductivity is that, when the MMVF filter unit is combined with the pump inside the internal cavity, a very good filtering effect is achieved.

The filter unit according to the present invention is at least partially submerged in the slurry contained in the tank. By this, it is meant that at least a portion of the sides of the filter unit is submerged in the slurry. Preferably, 60 to 80 % of the filter unit is submerged, more preferably 75 to 80%. The benefit of this is that it allows sufficient filtering effect whilst also preventing unfiltered liquid from passing into the internal cavity via an open top face. Equally, this maximises the surface area of the MMVF filter unit for filtering slurry, and therefore maximises the filtering effect.

The filter unit according to the invention may be completely submerged in the slurry contained in the tank. By this, it is meant that 100% of the filter unit is submerged in the slurry. In this embodiment, the filter unit comprises a bottom surface and a lid on the top surface. This ensures that the internal cavity is sealed from unfiltered slurry in the tank. In this embodiment, the inlet of the pump enters the internal cavity through a hole in the lid. This prevents unfiltered slurry from entering the internal cavity. In this embodiment, the filter unit preferably comprises two outlets: a first filter unit outlet for removing filtered slurry and a second filter unit outlet for air (this enables functioning of the pump).

In this embodiment of being completely submerged, the filter unit may have a bottom surface and lid that are not permeable to liquid. Alternatively, the filter unit may have a bottom surface and a lid that are permeable. For example, the bottom surface and lid may comprise coherent man-made vitreous fibres (MMVF) bonded with a cured binder composition. Preferably, the filter unit comprises sides that are permeable and a bottom surface and lid that are impermeable to liquid.

When the filter unit is completely submerged, it may comprise legs on the bottom surface, preferably at least two legs, more preferably four legs. The legs ensure that the filter unit remains upright in use. Preferably the legs stand on the bottom of the slurry tank.

The filter apparatus comprises a support structure. The support structure can be any structure in which the filter can be positioned. The support structure is preferably a frame structure, such as a steel frame and/or a plastic or fibre reinforced plastic frame, encasing the filter unit. Such frame structure is preferably open and made so the filter apparatus is easy to lift in and out of the tank. Preferably, the support structure has a lower section and an upper section. Preferably the support structure is a frame with side surfaces and a bottom surface. Preferably, the support structure has four sides and a bottom. The support structure allows for liquid to pass from the first fluid region to the second fluid region through the walls of the filter unit.

In a preferred embodiment, the support structure of the filter apparatus has outer dimensions of 100-200 cm x 100-200 cm x 130-220 cm, preferably approx. 150 cm x 150 cm x 180 cm.

The support structure is preferably made of a frame and formed as a cube-like cage and with a lifting element above the cage, wherein the filter unit is placed. Preferably, the sides of the filter unit cover at least the lower section of the support structure i.e. the four sides and the bottom of the support structure.

Preferably, the support structure is a cage that entirely surrounds the filter unit. Preferably, it is made of round metal sticks welded together having holes in the dimensions 50*50 mm or 25*25 mm.

In the one embodiment, the support structure is provided with a plurality of buoyancy elements for floating the support structure on the slurry. A buoyancy element may be any aid that allows the filter apparatus to float in the slurry. Preferably, the buoyancy element is an air-containing element. It may be made of any suitable material, such as plastic or steel. Its size can be any suitable size relative to the size and weight of the filter apparatus.

Preferably the buoyancy element is arranged such that at least the lower section of the filter apparatus is submerged in the slurry, such as a buoyancy element at each side to ensure the stability and the correct orientation of the filter apparatus when floating in the slurry tank. Preferably, the buoyancy element is provided such that the uppermost portion of the filter apparatus is kept above the slurry line by a certain distance to prevent unfiltered slurry bypassing the filter unit and thereby escaping into the internal cavity of the filter unit. Preferably, the filter apparatus is kept 10 to 80 cm above the slurry line, preferably 20 to 40 cm.

In an alternative embodiment, the support structure is configured for attachment to a side wall of the slurry tank. Preferably the slurry tank comprises a fixable member which is adapted to be fixed to a side wall of the tank. The fixable member may be temporarily fixed to the side wall of the tank, such that is can be removed at any point. It may be fixed to the side of the wall for storage of certain equipment e.g. stirrers or flocculants.

In this embodiment, preferably, the support structure has a connecting element. The connecting element of the filter apparatus is coupled to the fixable member via a connector, such that the filter apparatus is suspended over the slurry tank, and is partially submerged in the slurry. Preferably, the connector, which is attached to the fixable member on the side wall of the tank, can be extended or contracted, so as to raise or lower the filter apparatus into the slurry. The connector may also be adapted to move horizontally, such that the filter apparatus can be removed from the slurry tank by being moved to one side. This ensures that the filter apparatus is positioned correctly depending on the level of slurry in the tank.

Alternatively, the fixable member may be adapted such that at least the portion to which the connector is attached can be moved up and down, and left to right. In this embodiment, the fixable member may comprise a first rod that is vertically connected to the fixable member. The first rod is connected to a second perpendicular rod, thus forming an upside down 'L' shape. The connector is attached to the second rod of the fixable member. The second rod is adapted to be moved up and down, such that that filter apparatus can be positioned correctly in the slurry. Further, the second rod is adapted to move in a plane perpendicular to the ground surface, so the filter apparatus may be hoisted up can and swung out of the tank. The second rod can be moved mechanically by any means known such as a crank or a pump.

In a preferred embodiment, the filter apparatus comprises a first rod attached to a second rod. This allows the filter unit and support structure to be lowered in and out of the slurry tank. When the filter unit is completely submerged in the slurry, the first rod and second rod are used to lower the filter unit and support structure into the slurry, and maintain the preferred position on the bottom surface of the slurry tank. The first rod is a hoisting rod.

The filter apparatus preferably comprises a reinforcing layer. Preferably, this is positioned on the internal faces of the sides of the filter unit i.e. the part of the sides that is in the internal cavity. Preferably, the reinforcing layer is a grid or netting. Preferably, the reinforcing layer is a wire mesh or wire netting. The reinforcing layer further strengthens the filter unit: the support structure is on the outside of the filter unit and the reinforcing layer is on the inside of the filter unit. Alternatively, the reinforcing layer may be positioned on the internal faces of the sides of the filter unit and the external faces of the sides of the filter unit. In this embodiment, the filter unit and the reinforcing layer are positioned inside the support structure.

The filter apparatus preferably comprises a pressure valve. The pressure valve is preferably used when the filter unit is completely submerged in the slurry. The pressure valve is preferably positioned in the lid of the filter unit to reduce overpressure in the cavity.

The method of filtering according to the present invention requires the step of providing a pump in the internal cavity of the filter apparatus. The pump has an inlet and an outlet. The inlet is positioned in the internal cavity of the filter apparatus, and the outlet is connected to a liquid storage tank. Once the pump is activated, the liquid component of the slurry passes from the first fluid region through the filter apparatus and into the second fluid region. In doing so, the filter apparatus filters out particles from the slurry and particle-free liquid is held in the internal cavity. The pump then transfers the liquid component to a liquid storage tank for further use (e.g. as fertiliser on fields). Liquid is drawn through the filter apparatus by the pump in the internal cavity so the solids are deposited on the outside of the filter apparatus and the particle-free liquid component inside the filter cavity is pumped to a liquid storage tank.

In a preferred embodiment, the pump is a submersible pump adapted for being submerged in the liquid component in the internal cavity inside the filter apparatus. The pump may advantageously be provided with a control unit including functions such as automatic start/stop, level sensing, etc. in order to ensure that the pump can be operated automatically.

In a preferred embodiment of the invention, a tube is provided in the pump for establishing flow communication between the outlet to the liquid storage tank for storing the substantially particle free liquid. The tube is preferably flexible so movements of the filter apparatus can be absorbed without the risk of damaging the tube and thereby interrupt the flow communication.

Preferably, the pump comprises a backflush function for releasing the solid deposits from the walls of the filter apparatus thereby renewing the filter function to prevent the exterior surface of the walls from being clogged. The backflush is provided by reversing the flow direction of the pump. The filter apparatus can be operated continuously for up to approximately four weeks before a backflush is necessary to remove the deposits on the outside of the filter. The backflush can be performed automatically by the control unit of the pump at predetermined intervals for releasing the solids deposits from the walls of the filter apparatus. Alternatively, the walls of the filter apparatus are renewed after a certain time of use.

An advantage of the method of filtering slurry according to the present invention is that it is a continuous process. It is not necessary to filter slurry in batches. Slurry can be added to the tank continuously, and the filtering process will proceed continuously. The liquid component is pumped out of the internal cavity continuously, and the solids component can be pumped out of the tank continuously. Therefore, the process of the present invention is much more convenient and efficient than existing batch processes.

The present invention also relates to a system comprising:
- a tank that contains slurry;
- a filter apparatus comprising a filter unit and a support structure, wherein the filter unit is at least partially submerged in the slurry, wherein the filter unit comprises sides defining an internal cavity;
- a pump having an inlet and an outlet, wherein the inlet is positioned in the internal cavity and the outlet is connected to a liquid storage tank;
wherein the sides of the filter unit comprise coherent man-made vitreous fibres (MMVF) bonded with a cured binder composition.

The system according to the present invention is as described above, and may have any of the preferred features described above.

The present invention relates to a filter apparatus for a slurry tank, comprising: a filter unit and a support structure, wherein the filter unit comprises sides defining an internal cavity; wherein the sides of the filter apparatus comprise coherent man-made vitreous fibres (MMVF) bonded with a cured binder composition.

The filter apparatus according to the present invention is as described above, and may have any of the preferred features described above.

The present application also relates to the use of a filter apparatus for increasing the solids content of slurry, wherein the filter apparatus comprises; a filter unit and a support structure, wherein the filter unit comprises sides defining an internal cavity; wherein the sides of the filter unit comprise coherent man-made vitreous fibres (MMVF) bonded with a cured binder composition.

Preferably, the solids content of the slurry is increased to 50 wt% or less, more preferably 6 to 15 wt%, most preferably 8 to 12 wt%. This is achieved by filtering out of the liquid component, which is pumped to a liquid storage tank.

The filter apparatus according to the present invention is as described above, and may have any of the preferred features described above.

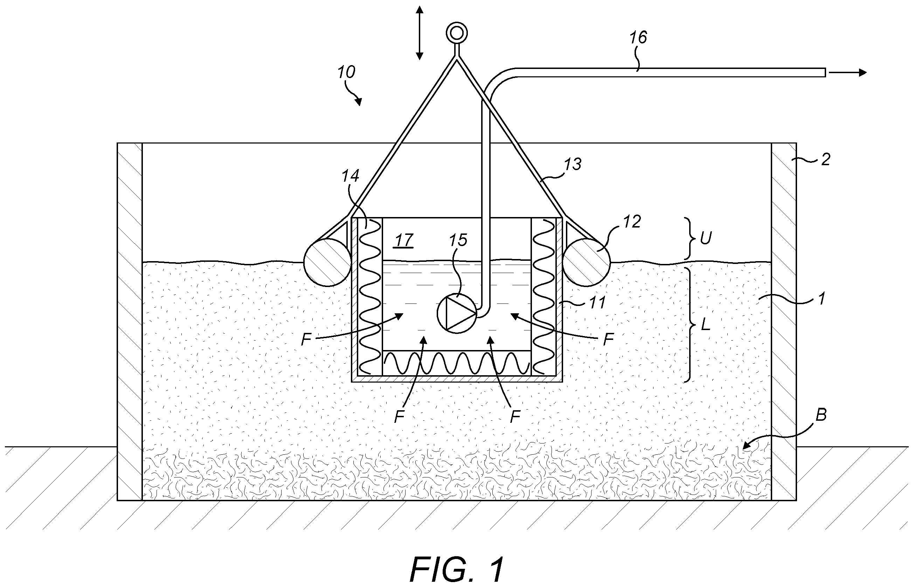

Figures 1 to 3 exemplify embodiments according to the present invention.

In Fig. 1 there is shown an embodiment of a filter apparatus 10 for filtering slurry 1 in tank 2 according to the invention.

The filter apparatus 10 comprises a support structure 11 having a lower section L and an upper section U and a number of buoyancy elements 12 on the outside of the support structure 11, so that the lower section L is submerged in the waste water 1.

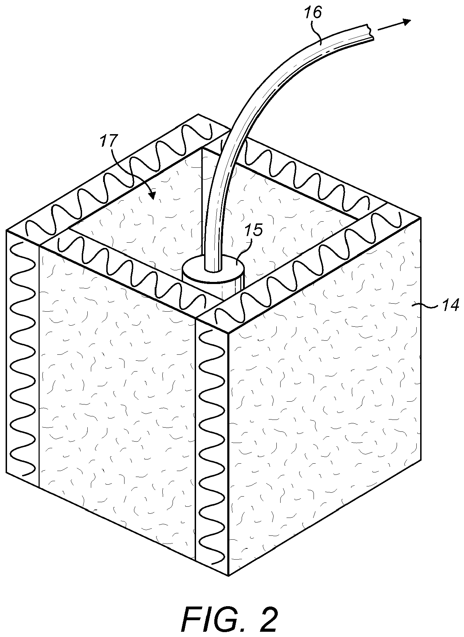

The support structure 11 is preferably made of a frame and formed as a cube-like cage and with a lifting structure 13 above the cage, wherein the filter unit 14 is placed (see also fig. 2). The filter unit 14 comprises sides of MMVF bonded with a cured binder composition, covering at least the lower section L of the support structure 11, i.e. the four sides and the bottom of the cage 11. Hereby, the sides of the filter unit 14 form an internal cavity 17 and an upwards facing opening.

In said internal cavity a pump 15 is provided. This pump 15 has an outlet for establishing a flow communication in a tube 16 between the pump outlet and a liquid storage tank (not shown) outside the slurry tank 2. The pump 15 sucks water from the slurry tank through the filter indicated by the arrows F in Fig. 1 and into the cavity 17, whereby solids in the slurry 1 are deposited on the exterior surface of the filtering mineral wool filter apparatus opposite the pump 17. This results in that a solids component (i.e. solid-rich sludge) is accumulated in the slurry tank 2, whereas a liquid component (i.e. a particle-free liquid) is present inside the internal cavity 17, which is then pumped to the exterior liquid storage tank (not shown). From this external tank the liquid component (i.e. particle-free liquid) can be distributed on the farm fields as fertiliser. The solids component (i.e. solid-rich slurry) may advantageously have 8-12 % solids so the slurry is still so liquidised that it can be pumped out of the slurry tank 2 by a sludge exhauster or the like and dried so it can be used in a bio plant for the production of biogas.

Figure 2 shows a filter unit according to an embodiment of the present invention. The sides of the filter unit 14 comprise MMVF bonded with a cured binder composition and define an internal cavity 17. A pump 15 is positioned in the internal cavity 17 and is connected to a liquid storage tank (not shown) via a tube 16.

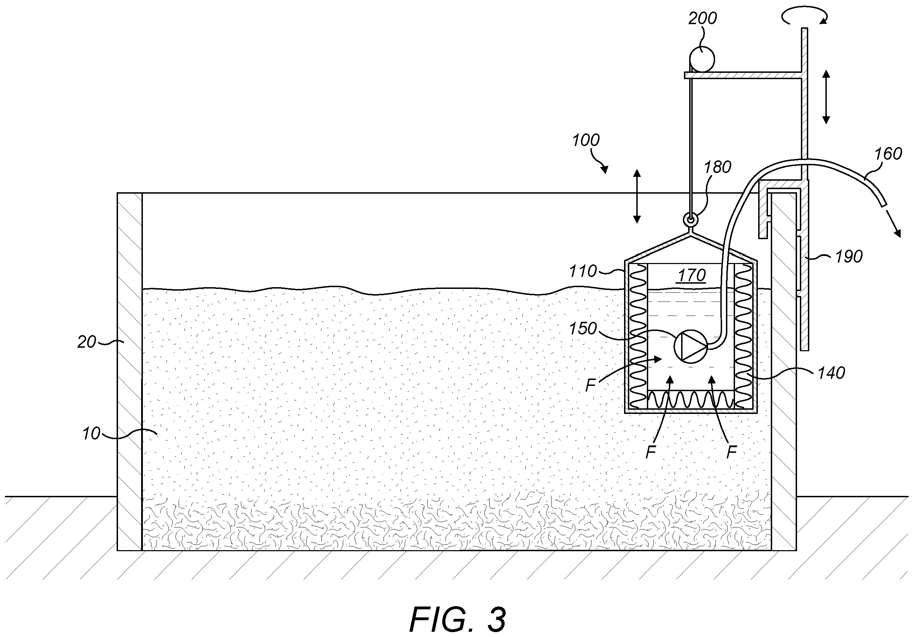

Figure 3 shows a system according to an embodiment of the invention. There is shown a filter apparatus 100 suspended in slurry 10 contained in a tank 20. The filter apparatus 100 comprises a filter unit 140 defining an internal cavity 170. A pump 150 is positioned in the internal cavity 170 of the filter apparatus and is connected to a liquid storage tank (not shown) via a tube 160. The pump 150 sucks water from the slurry tank 20 through the filter indicated by the arrows F. The filter apparatus 100 comprises a support structure 110 having a connecting element 180. The slurry tank 20 comprises a fixable member 190 which is adapted to be fixed to a side wall of the tank. The connecting element 180 is coupled to the fixable member 190 via a connector 200, such that the filter apparatus 100 is suspended over the slurry tank 20, and is partially submerged in the slurry 10.

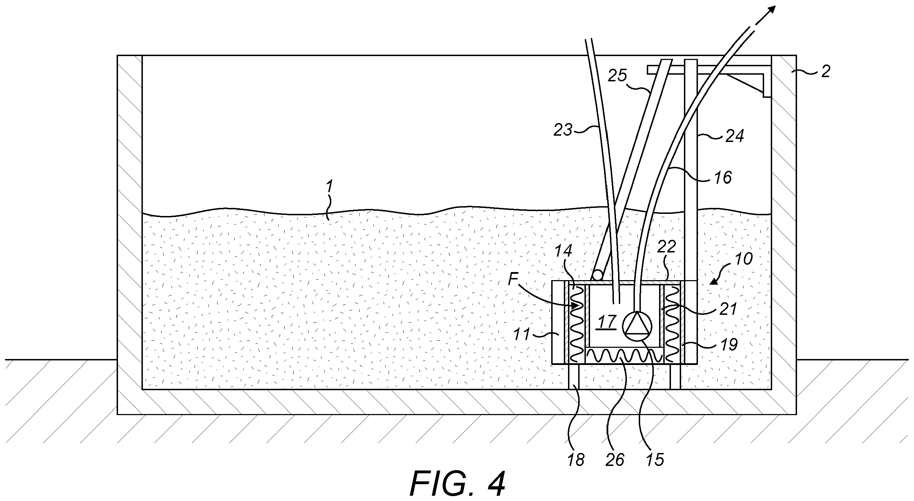

Figure 4 shows a filter apparatus 10 for filtering slurry 1 in tank 2 according to the invention. The filter apparatus 10 is completely submerged in the slurry 1. The filter apparatus 10 has legs 18 which allow it to stand on the bottom of the tank 2. The filter apparatus is lowered into the tank or lifted out of the tank by use of a first rod 24 and a second rod 25. These also maintain the filter apparatus 10 in position during use.

The filter apparatus 10 comprises a support structure 11, an outer reinforcing layer 19 and an inner reinforcing layer 21. The inner and outer reinforcing layers provide extra support to the filter unit 14.

The filter unit 14 comprises sides of MMVF bonded with a cured binder composition, a bottom surface 26 and a lid 22, forming an internal cavity 17. In said internal cavity a pump 15 is provided. This pump 15 has an outlet for establishing a flow communication in a tube 16 between the pump outlet and a liquid storage tank (not shown) outside the slurry tank 2. The tube 16 passes through the lid 22. The pump 15 sucks water from the slurry tank through the filter indicated by the arrows F in and into the cavity 17, whereby solids in the slurry 1 are deposited on the exterior surface of the filtering mineral wool filter apparatus opposite the pump 15. The filter unit 14 also comprises an outlet for air 23.

## Claims

1. A method of filtering slurry comprising the steps of:
- providing a tank containing slurry, wherein the slurry comprises a liquid component and a solids component; and wherein the tank defines a first fluid region;
- providing a filter apparatus comprising a filter unit and a support structure, wherein the filter unit is at least partially submerged in the slurry, wherein the filter unit comprises sides defining an internal cavity; and wherein the internal cavity defines a second fluid region;
- providing a pump having an inlet and an outlet, wherein the inlet is positioned in the internal cavity and the outlet is connected to a liquid storage tank;
- activating the pump, such that the liquid component of the slurry passes from the first fluid region, through the walls of the filter apparatus and into the second fluid region;
wherein the sides of the filter unit comprise coherent man-made vitreous fibres (MMVF) bonded with a cured binder composition.

2. The method according to claim 1, wherein the coherent MMVF has a density in the range of 70-200 kg/m³, preferably 70 to 150 kg/m³ most preferably 100 to 120 kg/m³.

3. The method according to any of claims 1 or 2, wherein the coherent MMVF is hydrophilic.

4. The method according to any preceding claim, wherein the filter apparatus further comprises a support structure provided with a plurality of buoyancy elements, such that the filter apparatus floats partially submerged in the slurry.

5. The method according to any of claims 1 to 3, wherein the filter apparatus comprises a support structure configured for attachment to a side wall of the tank, such that the filter apparatus is partially submerged in the slurry.

6. The method according to any preceding claim, wherein the support structure is a frame structure encasing the filter.

7. The method according to any preceding claim, wherein the slurry is manure slurry.

8. The method according to any preceding claim, wherein the pump is a submersible pump adapted for being submerged in the liquid component of the slurry in the cavity of the filter apparatus.

9. The method according to any preceding claim, wherein the pump comprises a backflush function for releasing the solids component from the walls of the filter apparatus.

10. The method according to any preceding claim, wherein the filter unit has a lid and a bottom surface closing the internal cavity, and wherein the filter unit is completely submerged in the slurry.

11. A system comprising:
- a tank (2) containing slurry;
- a filter apparatus (10) comprising a filter unit (14) and a support structure (11), wherein the filter unit (14) is at least partially submerged in the slurry (1), wherein the filter unit (14) comprises sides defining an internal cavity (17);
- a pump (15) having an inlet and an outlet, wherein the inlet is positioned in the internal cavity (17) and the outlet is connected to a liquid storage tank;
wherein the sides of the filter unit (14) comprise coherent man-made vitreous fibres (MMVF) bonded with a cured binder composition.

12. The system according to claim 11, comprising any of the further features recited in claims 2 to 10.

13. A filter apparatus (10) for a slurry tank (2), comprising:
a filter unit (14) and a support structure (11), wherein the filter unit (14) comprises sides defining an internal cavity (17);
wherein the sides of the filter unit (14) comprise coherent man-made vitreous fibres (MMVF) bonded with a cured binder composition.

14. Use of a filter apparatus for increasing the solids content of slurry, wherein the filter apparatus comprises;
a filter unit and a support structure, wherein the filter unit comprises sides defining an internal cavity;
wherein the sides of the filter apparatus comprise coherent man-made vitreous fibres (MMVF) bonded with a cured binder composition.

15. The filter apparatus according to claim 13, or use according to claim 14, wherein the filter apparatus comprises any of the further features recited in claims 2 to 7.

## Patentansprüche

1. Verfahren zum Filtern von Schlamm, folgende Schritte umfassend:
- Bereitstellen eines Schlamm enthaltenden Tanks, wobei der Schlamm eine flüssige Komponente und eine Feststoffkomponente umfasst, und wobei der Tank einen ersten flüssigen Bereich definiert;
- Bereitstellen einer Filtervorrichtung, die eine Filtereinheit und eine Stützstruktur umfasst, wobei die Filtereinheit wenigstens teilweise in den Schlamm getaucht ist, wobei die Filtereinheit Seiten umfasst, die einen inneren Hohlraum definieren; und wobei der innere Hohlraum einen zweiten flüssigen Bereich definiert;
- Bereitstellen einer Pumpe mit einem Einlass und einem Auslass, wobei der Einlass im inneren Hohlraum positioniert ist, und der Auslass mit einem Flüssigkeitsvorratstank verbunden ist,
- Aktivieren der Pumpe derart, dass sich die flüssige Komponente des Schlamms aus dem ersten flüssigen Bereich, durch die Wände der Filtervorrichtung und in den zweiten flüssigen Bereich bewegt;
wobei die Seiten der Filtereinheit zusammenklebende künstliche Glasfasern (MMVF) umfassen, die mit einer vernetzten Bindemittelzusammensetzung verklebt sind.

2. Verfahren nach Anspruch 1, wobei die zusammenklebende künstliche Glasfaser (MMVF) eine Dichte im Bereich von 70-200 kg/m³, vorzugsweise 70 bis 150 kg/m³ am meisten bevorzugt 100 bis 120 kg/m³ aufweist.

3. Verfahren nach irgendeinem der Ansprüche 1 oder 2, wobei die zusammenklebende künstliche Glasfaser (MMVF) hydrophil ist.

4. Verfahren nach irgendeinem vorhergehenden Anspruch, wobei die Filtervorrichtung ferner eine Stützstruktur umfasst, die mit einer Vielzahl von Schwimmkörperelementen derart versehen ist, dass die Filtervorrichtung teilweise eingetaucht im Schlamm schwimmt.

5. Verfahren nach irgendeinem der Ansprüche 1 bis 3, wobei die Filtervorrichtung eine Stützstruktur umfasst, die zur Anbringung an eine Seitenwand des Tanks derart ausgelegt ist, dass die Filtervorrichtung teilweise im Schlamm eingetaucht ist.

6. Verfahren nach irgendeinem vorhergehenden Anspruch, wobei die Stützstruktur eine Rahmenstruktur ist, die den Filter umhüllt.

7. Verfahren nach irgendeinem vorhergehenden Anspruch, wobei der Schlamm Gülle ist.

8. Verfahren nach irgendeinem vorhergehenden Anspruch, wobei die Pumpe eine Tauchpumpe ist, die angepasst ist, in die flüssige Komponente des Schlamms im Hohlraum der Filtervorrichtung getaucht zu sein.

9. Verfahren nach irgendeinem vorhergehenden Anspruch, wobei die Pumpe eine Rückspülfunktion umfasst, um die Feststoffkomponente von den Wänden der Filtervorrichtung zu lösen.

10. Verfahren nach irgendeinem vorhergehenden Anspruch, wobei die Filtereinheit einen Deckel und eine Bodenfläche aufweist, welche den inneren Hohlraum verschließen, und wobei die Filtereinheit völlig in den Schlamm getaucht ist.

11. System, umfassend:
- einen Tank (2), der Schlamm (Gülle) enthält;
- eine Filtervorrichtung (10), die eine Filtereinheit (14) und eine Stützstruktur (11) umfasst, wobei die Filtereinheit (14) wenigstens teilweise in den Schlamm (1) eingetaucht ist, wobei die Filtereinheit (14) Seiten umfasst, die einen inneren Hohlraum (17) definieren;
- eine Pumpe (15) mit einem Einlass und einem Auslass, wobei der Einlass im inneren Hohlraum (17) positioniert ist und der Auslass mit einem Flüssigkeitsvorratstank verbunden ist,
wobei die Seiten der Filtereinheit (14) zusammenklebende künstliche Glasfasern (MMVF) umfassen, die mit einer vernetzten Bindemittelzusammensetzung verklebt sind.

12. System nach Anspruch 11, das irgendwelche der weiteren Merkmale umfasst, die in den Ansprüchen 2 bis 10 rezitiert sind.

13. Filtervorrichtung (10) für einen Schlammtank (2), umfassend:
Eine Filtereinheit (14) und eine Stützstruktur (11), wobei die Filtereinheit (14) Seiten umfasst, die einen inneren Hohlraum (17) definieren;
wobei die Seiten der Filtereinheit (14) zusammenklebende künstliche Glasfasern (MMVF) umfassen, die mit einer vernetzten Bindemittelzusammensetzung verklebt sind.

14. Verwendung einer Filtervorrichtung zur Erhöhung des Feststoffgehalts von Schlamm, wobei die Filtervorrichtung umfasst,
eine Filtereinheit und eine Stützstruktur, wobei die Filtereinheit Seiten umfasst, die einen inneren Hohlraum definieren;
wobei die Seiten der Filtervorrichtung zusammenklebende künstliche Glasfasern (MMVF) umfassen, die mit einer vernetzten Bindemittelzusammensetzung verklebt sind.

15. Filtervorrichtung nach Anspruch 13, oder die Verwendung nach Anspruch 14, wobei die Filtervorrichtung irgendwelche der weiteren Merkmale umfasst, die in den Ansprüchen 2 bis 7 rezitiert sind.

## Revendications

1. Procédé de filtrage de boues, comprenant les étapes suivantes, et comportant :
- une cuve contenant de la boue, la boue comprenant une composante liquide et une composante solide ; et la cuve définissant une première zone de fluide ;
- un appareil de filtrage comprenant une unité de filtrage et une structure de support, l'unité de filtrage étant au moins partiellement submergée dans la boue, l'unité de filtrage comprenant des côtés définissant une cavité interne ; et la cavité interne définissant une deuxième zone de fluide ;
- une pompe possédant une entrée et une sortie, l'entrée étant positionnée dans la cavité interne et la sortie étant raccordée à une cuve de stockage du liquide ;
- l'activation de la pompe, de sorte que la composante liquide de la boue passe de la première zone de fluide à la deuxième zone de fluide, à travers les parois de l'appareil de filtrage ;
les côtés de l'unité de filtrage comprenant des fibres vitreuses artificielles cohérentes (MMVF) fixées à l'aide d'une composition de liant durci.

2. Procédé selon la revendication 1, la densité des MMVF cohérentes étant comprise dans la plage 70 - 200 kg/m³, de préférence 70 - 150 kg/m³, mieux encore 100 - 120 kg/m³.

3. Procédé selon une quelconque des revendications 1 ou 2, les MMVF étant hydrophiles.

4. Procédé selon une quelconque des revendications précédentes, l'appareil de filtrage comprenant en outre une structure de support dotée d'une pluralité d'éléments de flottabilité, de sorte que l'appareil de filtrage flotte partiellement submergé dans la boue.

5. Procédé selon une quelconque des revendications 1 à 3, l'appareil de filtrage comprenant une structure de support configurée pour sa fixation sur une paroi latérale de la cuve, de sorte que l'appareil de filtrage soit partiellement submergé dans la boue.

6. Procédé selon une quelconque des revendications précédentes, la structure de support étant une structure de bâti enveloppant le filtre.

7. Procédé selon une quelconque des revendications précédentes, la boue étant un lisier.

8. Procédé selon une quelconque des revendications précédentes, la pompe étant une pompe submersible adaptée pour être submergée dans la composante liquide de la boue dans la cavité de l'appareil de filtrage.

9. Procédé selon une quelconque des revendications précédentes, la pompe comprenant une fonction de lavage à contre-courant pour détacher la composante solide des parois de l'appareil de filtrage.

10. Procédé selon une quelconque des revendications précédentes, l'unité de filtrage possédant un couvercle et une surface inférieure fermant la cavité interne, et l'unité de filtrage étant entièrement submergée dans la boue.

11. Système comprenant :
- une cuve (2) contenant de la boue ;
- un appareil de filtrage (10) comprenant une unité de filtrage (14) et une structure de support (11), l'unité de filtrage (14) étant au moins partiellement submergée dans la boue (1), l'unité de filtrage (14) comprenant des côtés définissant une cavité interne (17) ;
- une pompe (15) avec une entrée et une sortie, l'entrée étant positionnée dans la cavité interne (17) et la sortie étant raccordée à une cuve de stockage du liquide ;
les côtés de l'unité de filtrage (14) comprenant des fibres vitreuses artificielles cohérentes (MMVF) fixées à l'aide d'une composition de liant durci.

12. Système selon la revendication 11, comprenant une quelconque des autres caractéristiques énoncées dans les revendications 2 à 10.

13. Appareil de filtrage (10) pour une cuve de boue (2) comprenant :
une unité de filtrage (14) et une structure de support (11), l'unité de filtrage (14) comprenant des côtés définissant une cavité interne (17) ;
les côtés de l'unité de filtrage (14) comprenant des fibres vitreuses artificielles cohérentes (MMVF) fixées à l'aide d'une composition de liant durci.

14. Utilisation d'un appareil de filtrage pour augmenter la teneur en solides de la boue, l'appareil de filtrage comprenant :
une unité de filtrage et une structure de support, l'unité de filtrage comprenant des côtés définissant une cavité interne ;
les côtés de l'appareil de filtrage comprenant des fibres vitreuses artificielles cohérentes (MMVF) fixées à l'aide d'une composition de liant durci.

15. Appareil de filtrage selon la revendication 13, ou utilisation selon la revendication 14, l'appareil de filtrage comprenant une quelconque des fonctions additionnelles énoncées dans les revendications 2 à 7.
